# EUROPÄISCHE PATENTSCHRIFT

(11) **EP 1 118 504 B1**
(45) Veröffentlichungstag und Bekanntmachung des Hinweises auf die Patenterteilung: **15.09.2004**
(21) Anmeldenummer: 00127910.8
(22) Anmeldetag: 20.12.2000
(51) Int. Cl.: B60R 13/02

(54) **Innenverkleidung für ein Kraftfahrzeug**
Vehicle interior panel
Panneau intérieur de véhicule

(30) Priorität: 19.01.2000 DE 10001987
(43) Veröffentlichungstag der Anmeldung: 25.07.2001
(73) Patentinhaber: Volkswagen Aktiengesellschaft, 38436 Wolfsburg (DE)
(72) Erfinder: Nickel, Rudi, 38458 Velpke (DE)

(56) Entgegenhaltungen:
- DE-A- 4 320 636
- DE-A- 4 423 108
- DE-U- 29 503 709
- DE-U- 29 821 991
- US-A- 5 997 078

## Beschreibung

Die Erfindung betrifft einen Innenverkleidungsmodul gemäß dem Oberbegriff des Patentanspruchs 1.

Der Einsatz von expandiertem Polypropylen im Rahmen von Teilen für die Innenverkleidung von Kraftfahrzeugen, insbesondere für Kraftfahrzeugtüren, ist aus verschiedenen Gründen vorteilhaft. Zum einen hat dieses Material nur geringes Gewicht, eine Eigenschaft, die sich bei der Großflächigkeit von Kraftfahrzeug-Innenverkleidungen deutlich bemerkbar macht, und zum anderen hat ein aus diesem Material hergestelltes Innenverkleidungsteil ein günstiges Deformationsverhalten. Während es nämlich bei einem Crash auftretende hohe Energien in relativ großem Maße in Verformungsarbeit, d.h. in bleibende Verformung, umsetzt, besitzt es hinsichtlich Deformationen aufgrund eines niedrigeren Energieniveaus, wie es beispielsweise bei Kraftbeaufschlagungen mit einer Hand auftritt, ein gutes Rückstellvermögen in seine ursprüngliche Form. Ein weiterer Vorteil ist die relativ leichte Herstellung von Teilen aus diesem Material unter Verwendung von Heißpressverfahren, wobei eine Kaschierung in dem selben Arbeitsgang aufgetragen werden kann.

Eine Schwierigkeit bezüglich des Einsatzes von EPP-Partikelschaum liegt darin, dass mit einer Kaschierung, wie PVC-Folie oder Stoff, versehene Teile aus diesem Material zu einem störenden Wärmeverzug neigen.

Die gattungsbildende DE 298 21 991 U1 beschreibt ein Verkleidungselement für den Innenausbau, insbesondere von Kraftfahrzeugen, bei dem alle Teile aus der gleichen Materialfamilie, vorzugsweise aus dem gleichen Material bestehen, um bei späterem Recycling eine kostenintensive Trennung von Bauteilen aus verschiedenen Materialien zu vermeiden. Zum Beispiel können die Teile aus expandierendem Polypropylen (EPP) gefertigt werden. Um eine gute Haptik zu erreichen, können Teile mit mehreren unterschiedlichen spezifischen Gewichten des gleichen Materials kombiniert werden.

Der Erfindung liegt die Aufgabe zugrunde, einen gattungsgemäßen Innenverkleidungsmodul unter Wahrung seiner vorteilhaften Eigenschaften zu schaffen, dessen Wärmeverzug mit einfachen Mittel zumindest verringert ist.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Während die Tendenz in der modernen Fertigung dahin geht, den gesamten Modul in einem einzigen Arbeitsgang, und damit einteilig, herzustellen, sieht die Erfindung vor, den Modul aus zwei Schalen herzustellen, die ihrerseits individuell gefertigt sind und dann möglichst flächig und damit schubübertragend verbunden werden.

An dieser Stelle sei eingefügt, daß der Begriff "Schale" im Rahmen der Erfindung eine weitgehende Bedeutung haben soll. So erfaßt er nicht nur eine relativ große geschlossene Fläche bildende Schalen, sondern (insbesondere hinsichtlich der weiteren Schale) auch rahmenartige Anordnungen. In jedem Fall ist aber eine Schale eine in sich eigensteife Anordnung.

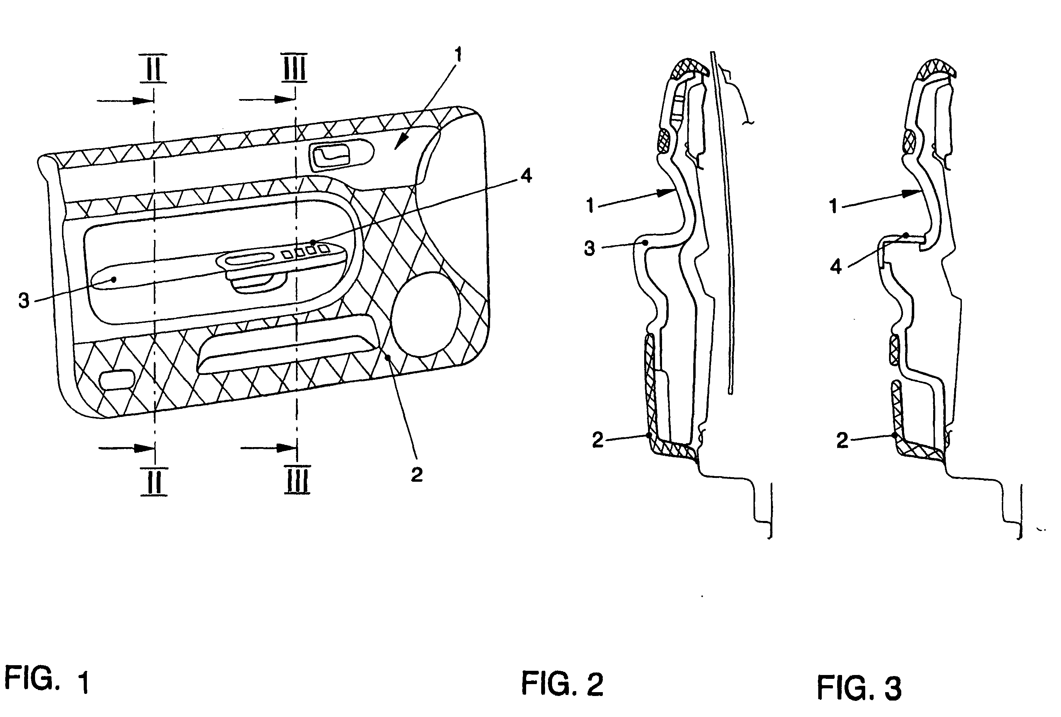

Ein Ausführungsbeispiel der Erfindung für den Fall eines Innenverkleidungsmoduls für eine Kraftfahrzeugtür wird in folgendem anhand der Zeichnung erläutert, deren Figur 1 eine Innenansicht und deren Figuren 2 und 3 die in Figur 1 bei II-II bzw. III-III angedeuteten senkrechten Schnitte wiedergeben.

Der Innenverkleidungsmodul enthält die in der Darstellung der Figur 1 hintere Schale 1 und die in dieser Darstellung vordere Schale 2, die, unabhängig davon, ob die jeweilige Figur eine Schnittansicht oder eine Ansicht darstellt, durch eine Kreuzschraffur hervorgehoben ist. In die Schale 1 ist die Armlehne 3 mit Betätigungselementen 4, beispielsweise für Fensterheber, eingearbeitet. Die Schale 1 besteht aus expandiertem Polypropylen mit einer Dichte, die im Hinblick auf die erforderlichen Deformationseigenschaften gewählt ist. Ein Dichtewert von etwa 40 g/l kann vorteilhaft sein.

Demgegenüber besteht die die erstgenannte Schale 1 nur örtlich rahmenartig überdeckende weitere Schale 2 zwar ebenfalls aus expandiertem Polypropylen, jedoch mit einer höheren Dichte von beispielsweise 100 g/l; die beiden Schalen 1 und 2 sind an ihren einander zugekehrten Flächen schubübertragend miteinander verbunden. Dies kann durch Ultraschallschweißungen oder durch induktive Wärmebehandlung (Anschmelzen von Oberflächenbereichen) erfolgt sein.

Zeichnerisch nicht dargestellt sind eine auf allen nur den freien, in den Figuren 2 und 3 nach links weisenden Oberflächenbereichen der Schale 1 vorgesehene Kaschierung aus einer Kunststoffolie oder einer Stoffbahn sowie eine weitere Kaschierung auf den nach links weisenden Oberflächenbereichen der weiteren Schale 2.

## Patentansprüche

1. Innenverkleidungsmodul für ein Kraftfahrzeug, insbesondere für eine Fahrzeugtür, mit einer unter Verwendung von expandiertem Polypropylen hergestellten, mit einer Kaschierung versehenen hinteren Schale (1), wobei die hintere Schale (1) mit einer sie nur örtlich überdeckenden vorderen Schale (2) aus expandiertem Polypropylen schubfest verbunden ist, **dadurch gekennzeichnet daß** das Material der vorderen Schale (2) eine höhere Dichte als dasjenige der hinteren Schale (1) aufweist.

2. Modul nach Anspruch 1, **dadurch gekennzeichnet, daß** die weitere Schale (2) ebenfalls kaschiert ist.

3. Modul nach Anspruch 1 oder 2, **dadurch gekennzeichnet, daß** die beiden Schalen (1, 2) durch Ultraschallschweißungen verbunden sind.

4. Modul nach Anspruch 1 oder 2, **dadurch gekennzeichnet, daß** die beiden Schalen (1, 2) durch induktive Wärmebehandlung verbunden sind.

## Claims

1. Interior trim-panel module for a motor vehicle, in particular for a vehicle door, having a rear shell (1) which is produced using expanded polypropylene and is provided with a lamination, the rear shell (1) being connected in a shearing-resistant manner to a front shell (2) of expanded polypropylene which covers the rear shell only in certain locations, **characterized in that** the material of the front shell (2) has a higher density than that of the rear shell (1).

2. Module according to Claim 1, **characterized in that** the further shell (2) is likewise laminated.

3. Module according to Claim 1 or 2, **characterized in that** the two shells (1, 2) are connected by ultrasonic weldings.

4. Module according to Claim 1 or 2, **characterized in that** the two shells (1, 2) are connected by inductive heat treatment.

## Revendications

1. Module d'habillage intérieur pour un véhicule automobile et en particulier pour une porte d'un véhicule, lequel module comporte une coquille arrière (1) fabriquée en recourant à du polypropylène expansé et dotée d'une doublure, la coquille arrière (1) étant reliée de manière à résister au glissement à une coquille avant (2) en polypropylène expansé qui ne la recouvre que par endroits, **caractérisé en ce que** le matériau de la coquille avant (2) a une densité plus élevée que celle de la coquille arrière (1).

2. Module selon la revendication 1, **caractérisé en ce que** l'autre coquille (2) est également doublée.

3. Module selon la revendication 1 ou 2, **caractérisé en ce que** les deux coquilles (1, 2) sont reliées par soudage aux ultrasons.

4. Module selon la revendication 1 ou 2, **caractérisé en ce que** les deux coquilles (1, 2) sont reliées par traitement thermique par induction.
